# EUROPEAN PATENT SPECIFICATION

(11) **EP 3 175 038 B1**
(45) Date of publication and mention of the grant of the patent: **12.09.2018**
(21) Application number: 15742268.4
(22) Date of filing: 27.07.2015
(51) Int. Cl.: D21H 25/06, B32B 29/00, D21H 27/30, D21H 17/06, D21H 17/24, D21H 27/18

(54) **LAMINATES**
LAMINATE
STRATIFIÉS

(30) Priority: 29.07.2014 GB 201413402
(43) Date of publication of application: 07.06.2017
(73) Proprietor: Knauf Insulation SPRL, 4600 Visé (BE); Knauf Insulation, Inc., Shelbyville, IN 46176 (US)
(72) Inventor: SCOTT, Tony, B-1435 Mont-Saint-Guibert (BE); RUXTON, Daniel, St Helens Merseyside WA10 3NS (GB)
(74) Representative: ARC-IP
(86) International application number: PCT/EP2015/067167
(87) International publication number: WO 2016/016193

(56) References cited:
- WO-A1-2011/022226
- WO-A1-2013/150123
- DE-A1-102004 036 664
- US-A1- 2014 134 909

## Description

The present invention relates to laminates and a process for their production.

Laminates, for example high pressure laminates, comprise a core of cellulosic fibrous based material and a protective overlay. A decorative layer, generally a paper layer, which may have a solid colour, pattern or decoration is generally provided between the core and the protective overlay, especially when a transparent or translucent overlay is used. The core generally comprises one or more layers of paper, typically kraft paper, impregnated with a thermosetting resin. The decorative layer and/or protective overlay may also be impregnated with a thermosetting resin. During manufacture the layers (core material, decorative layer and overlay) are pressed together under simultaneous application of heat and high pressure to obtain a homogeneous preferably non porous material.

Laminates may be used to provide a surface finish to a substrate for interior or exterior applications, for example walls, partitions, ceilings, doors, flooring, stairs, furniture, trims, windows sills, tables, work tops, counter tops, vanity units, cubicles, balconies, facades and signs. When adapted for exterior use the laminate may comprise an additional outer layer or coating to enhance weathering and/or light protecting properties.

Traditionally the thermosetting resin of the core has been a phenolformaldehyde resin and the thermosetting resin of the surface layer has been a melamine-formaldehyde resin. Whilst such resins provide a number of suitable properties there has for some time been a desire to move away or reduce the use of formaldehyde, particularly for environmental impact. One aim of the present invention is thus to provide a way of producing a low or reduced formaldehyde laminate in a way that provides acceptable properties and is compatible with existing manufacturing methods.

According to one aspect, the present invention provides a method of manufacturing a laminate as defined in claim 1. Addition aspects are defined in other independent claims. The dependent claims define preferred or alternative embodiments.

The term "laminate, as used herein means laminates of the type described above. The laminates may be high pressure laminates (HPL), continuous pressure laminates (CPL), low pressure laminates (LPL) or compact laminates.

One problem associated with the manufacture of laminates is to ensure adequate permeation of a binder, notably in to a core layer. The layer(s) of the laminate must be permeated with a sufficient quantity of binder to provide required strength and resistance when curing in a time frame which allows efficient manufacture, preferably using existing machinery and processes. It has been found that these requirement are met when using the method defined herein.

The term "core binder solution" as used herein means a binder solution used for or adapted for use in the core of a laminate and the term core binder means the binder of the core of a laminate.

The core binder solution may be a binder solution as described in any of WO 2007/014236, WO 2009/019232, WO 2009/019235, WO 2011/138458, WO 2011/138459 or WO 2013/150123 each of which is hereby incorporated by reference.

The core binder solution is preferably "substantially formaldehyde free", that is to say that it liberates less than 5 ppm formaldehyde as a result of drying and/or curing (or appropriate tests simulating drying and/or curing); it is preferably "formaldehyde free", that is to say that it liberates less than 1 ppm formaldehyde in such conditions.

The reducing sugar reactant(s) may comprise one or more reducing sugars; it may comprise one or more reducing sugars generated in situ, notably from a carbohydrate reactant which yields reducing sugar(s) in situ, for example due to application of heat and/or presence of a catalyst or further reactant. The nitrogen-containing reactant(s) of the core binder solution are adapted to react with the reducing sugar(s) to form a binder and/or to form binder precursors.

The aqueous core binder solution may comprises: (a) unreacted reducing sugar reactant(s) and unreacted nitrogen-containing reactant(s); or (b) reaction product(s) of reducing sugar reactant(s) and nitrogen-containing reactant(s); or (c) a combination of (a) and (b).

The nitrogen-containing reactant(s) and the reducing sugar reactant(s) (or their reaction product(s)) may be Maillard reactants that react to form Maillard reaction products, notably melanoidins when cured. Curing of the binder may comprise or consists essentially of Maillard reaction(s). The cured binder may comprise melanoidin-containing and/or nitrogenous-containing polymer(s); it is preferably a thermoset binder and is preferably substantially water insoluble.

Solutions containing reaction product(s) of nitrogen containing reactant(s) and reducing sugar reactant(s) prior to curing (notably prior to crosslinking by application of heat and or pressure) may comprise intermediate reaction specie(s), for example pre-polymers, in significant quantities, and/or reduced viscosity per solid content and/or increased average molecular weight, and/or increased colour and/or light (eg UV) absorption.

The reducing sugar reactant may comprise: a monosaccharide, a monosaccharide in its aldose or ketose form, a disaccharide, a polysaccharide, a triose, a tetrose, a pentose, xylose, an hexose, dextrose, fructose, a heptose, a sugar, molasses, starch, starch hydrolysate, cellulose hydrolysates, reaction product(s) thereof or mixtures thereof. The reducing sugar reactant may have a dextrose equivalent of at least about 50, at least about 60, at least about 70, at least about 80 or at least about 90.

The nitrogen-containing reactant may comprise ammonia, NH₃, inorganic amine(s), organic amine(s) comprising at least one primary amine group, salts thereof and combinations thereof. For example, the nitrogen-containing reactant may comprise NH₃ (e.g. in the form of an aqueous solution), any type of inorganic and organic ammonium salts, ammonium sulfate, ammonium phosphate, ammonium chloride, ammonium nitrate and combinations thereof. The nitrogen-containing reactant may comprise a polyamine; it may comprise a primary polyamine. Herein, the term "polyamine" includes any organic compound having two or more amine groups, which may independently be substituted. As used herein, a "primary polyamine" is an organic compound having two or more primary amine groups (-NH₂). Within the scope of the term primary polyamine are those compounds which can be modified in situ or isomerize to generate a compound having two or more primary amine groups (-NH₂). The primary polyamine may be a diamine, for example a di-primary diamine, triamine, tetraamine, or pentamine. The polyamine may comprise a diamine selected from 1,2-diaminoethane, 1,4-diaminobutane, 1,5-diaminopentane, 1,6-diaminohexane (hexamethylenediamine, HMDA), 1,12-diaminododecane, 1,4-diaminocyclohexane, 1,4-diaminobenzene, 1,5-diamino-2-methylpentane (2-methyl-pentamethylenediamine), 1,3-pentanediamine, and 1,8-diaminooctane. The nitrogen-containing reactant may comprise a primary polyamine polyether-polyamine; said polyether-polyamine may be a diamine or a triamine.

The reducing sugar reactant(s), may make up:
- at least 30%, preferably at least 40%, preferably at least 50%, more preferably at least 60%, more preferably at least 70%, even more preferably at least 80% by dry weight of the uncured aqueous core binder solution; and/or
- less than 99%, preferably less than 97%, more preferably less than 95 % by dry weight of the uncured aqueous core binder solution.

The nitrogen-containing reactant(s) may make up:
- less than 50%, preferably less than 30%, more preferably less than 25% by dry weight of the uncured aqueous binder solution; and/or
- at least 2.5%, preferably at least 5%, more preferably at least 10% by dry weight of the uncured aqueous binder solution.

The aqueous core binder solution may comprises (i) at least 25%, and preferably at least 40%, at least 50% or at least 60% by dry weight of: (a) reducing sugar reactant(s) and nitrogen-containing reactant(s) and/or (b) curable reaction product(s) of reducing sugar reactant(s) and nitrogen-containing reactant(s).

The core binder may include ester and/or polyester compounds.

The non-aqueous solvent is a solvent other than water; it should be miscible with water. It may comprise a polar protic solvents, for example an alcohol, notably methanol, ethanol, butanol, propanol or isopropanol, diethanolamine. A preferred solvent comprises or consists of methanol. The non-aqueous solvent may comprise a polar aprotic solvent, for example acetonitrile, dimethylformamide, dimethyl sulfoxide, tetrahydrofuran, acetone, dichloromethane or ethyl acetate. Combinations of any two or more solvents may also be used.

The non-aqueous solvent may be present in the uncured aqueous binder solution in a quantity of:
- at least 5% or at least 7%, or at least 9% by weight based on the total weight of the uncured aqueous binder solution and/or
- no more than 15% or no more than 13% or no more than 11% by weight based on the total weight of the uncured aqueous binder solution.
Such amounts of non-aqueous solvent provide suitable levels of viscosity and permeability whilst avoiding unnecessarily large quantities of solvent which would have to be recovered during the manufacturing process.

The uncured aqueous binder solution, notably in the state in which it is impregnated into the core material may have a viscosity which is:
- greater than or equal to: 10 cP, 25 cP, 50 cP, 75 cP or 85 cP or 95 cP or 105 cP or 115 cP or 150 cP; and/or
- less than or equal to: 500 cP or 450 cP or 410 cP or 380 cP or 350 cP or 320 cP or 300 cP or 270 cP or 250 cP or 200 cP;
notably when the viscosity is measured at 20°C. The viscosity is measured by rotational viscometry notably using a Brookfield viscometer. One such viscosity measurement involves applying a torque through a calibrated spring to a spindle immersed in a test fluid, the amount of viscous drag indicated by the spring deflection providing a measure of the viscosity.

The uncured aqueous binder solution may have a solid content of:
- greater than or equal to: 40% or 45% or 50% or 55% or 60%; and/or
- less than or equal to: 85% or 80% or 75% or 70% or 65%;
notably determined as bake out solids by weight, for example after drying at 140 °C for 2 hours.
This provides suitable levels of physical properties, for example tensile strength, to the core of the laminate when cured.

The core material comprises one or more fibrous layers, notably of any suitable fibrous sheet materials, for example cellulosic fibrous sheet material, which can be saturated with, or can absorb the uncured aqueous core binder solution. Preferably the core material comprises one or more fibrous paper sheet materials, for example of kraft paper. The kraft paper may have a weight which is ≥ 80 g/m² or ≥ 100 g/m² and/or ≤ 300 g/m² or ≤ 200 g/m², for example about 105 g/m².

The binder of the surface layer is preferably a thermosetting binder and may comprise an amino-formaldehyde resin, preferably a urea-formaldehyde, melamine-formaldehyde, etherified urea-formaldehyde or etherified melamine-formaldehyde or phenolic formaldehyde, acrylic-, epoxy-, polyester-, or polyurethane- resins or combinations thereof. In a preferred embodiment it comprises melamine binder.

The binder of the surface layer may be or comprise the same binder as the core binder.

Particularly for a high pressure laminate , applying heat and pressure to the semi-finished assembly may comprise applying a pressure which is ≥ 60 kg/cm² (≥ about 850 lb per sq inch) or ≥ 70 kg/cm² (≥ about 1000 lb per sq inch) or ≥ 84 kg/cm² (≥ about 1200 lb per sq inch) and/or ≤ 140 kg/cm² (≤ about 2000 lb per sq inch) or ≤ 120 kg/cm² (≤ about 1700 lb per sq inch) or ≤ 100 kg/cm² (≤ about 1420 lb per sq inch). The core binder and the binder of the surface layer are preferably cured at the same time in a single curing step; nevertheless, they may be cured separately.

Pressing conditions, notably for a high pressure laminate may include use a press, for example a multi-daylight press, to produce a number of laminates per cycle which is greater than or equal to 5, 10 or 20 and/or less than or equal to 600, 500, 400, 300 or 200. The preferred thickness of each of the laminates with theses pressing conditions is greater than or equal to 0.5 mm, 1 mm or 2 mm and/or less than or equal to 50 mm, 40 mm, 30 mm or 20 mm. The temperature of the press may be greater than or equal to about 100°C or 120°C and/or less than or equal to about 160°C or 150 °C. The presstime (i.e. duration from entry in to the press to exit from the press) may be:
- ≥ 15 minutes or ≥ 25 minutes; and/or
- ≤ 140 minutes or ≤ 100 minutes.

Pressing conditions, notably for a short cycle high pressure laminate, may include use of a single-daylight press to press one or two laminates per cycle. The preferred thickness for the laminates with theses pressing conditions may be greater than or equal to 0.5 mm, 1 mm or 2 mm and/or less than or equal to 20 mm, 18 mm or 15 mm. The temperature of the press may be greater than or equal to about 140°C or 160°C and/or less than or equal to about 220°C or 200 °C. The presstime may be:
- ≥ 0.5 minute or ≥ 1 minute; and/or
- ≤ 4 minutes or ≤ 3 minutes.

Particularly for continuous pressure laminates , applying heat and pressure to the semi-finished assembly may comprise applying a pressure which is ≥ 20 kg/cm² (≥ about 285 lb per sq inch) or ≥ 25 kg/cm² (≥ about 355 lb per sq inch) or ≥ 30 kg/cm² (≥ about 425 lb per sq inch) and/or ≤ 80 kg/cm² (≤ about 1135 lb per sq inch) or ≤ 75 kg/cm² (≤ about 1065 lb per sq inch) or ≤ 70 kg/cm² (≤ about 1000 lb per sq inch).

Pressing conditions, notably for continuous pressure laminates, may use a double-belt press. The preferred thickness for the laminates with these pressing conditions is greater than or equal to 0.1 mm, 0.2 mm or 0.3 mm and/or less than or equal to 1.5 mm or 1.2 mm. The temperature of the press may be greater than or equal to about 140°C or 160°C and/or less than or equal to about 220°C or 200°C. The presstime may be:
- ≥ 10 seconds or ≥ 12 seconds; and/or
- ≤ 30 seconds or ≤ 20 seconds.

Particularly for low pressure laminates, pressing conditions may include a temperature of the press greater than or equal to about 140°C or 160°C and/or less than or equal to about 220°C or 200°C. Applying heat and pressure to the semi-finished assembly may comprise applying a pressure which is ≥ 15 kg/cm² or ≥ 20 kg/cm² and/or ≤ 40 kg/cm² or ≤ 50 kg/cm² for example about 30 kg/cm² (about 430 lb per sq inch). The presstime may be:
- ≥ 10 seconds or ≥ 15 seconds; and/or
- ≤ 40 seconds or ≤ 30 seconds.

The laminate may comprise a number of layers in the core layer which is ≥ 2, ≥ 3, ≥ 5, ≥ 10, ≥ 20, ≥ 30, ≥ 40 or ≥ 50 and /or ≤ 250, ≤ 200, ≤ 180, ≤ 150 or ≤ 100.

The invention will be illustrated with reference to the non-limiting examples set out in Table 1.

**Table 1**

| | **Binder** | | | | **Average permeation time (seconds)** | **Viscosity (cP)** |
|---|---|---|---|---|---|---|
| Comparative example | Bakelite PF 1981 HD - RT | | | | 38.3 | 106.0 |
| | **Example aqueous core binder solutions** | | | | | |
| Example | carbohydrate reactant % by dry weight of the uncured aqueous binder solution | nitrogen containing reactant % by dry weight of the uncured aqueous binder solution | % of bake out solid in the uncured aqueous binder solution | Non-aqueous solvent (% weight with respect to the uncured aqueous binder solution) | | |
| 1 | DMH 47% + Fructose 47% | HMDA (6%) | 70% | none | 180.7 | 280.9 |
| 2 | DMH 47% + Fructose 47% | HMDA (6%) | 70% | 5% methanol | 67.3 | 192.0 |
| 3 | DMH 47% + Fructose 47% | HMDA (6%) | 70% | 10% methanol | 17.3 | 132.0 |
| 4 | DMH 46% + Fructose 46% | HMDA (8%) | 70% | none | 168.3 | 254.9 |
| 5 | DMH 46% + Fructose 46% | HMDA (8%) | 70% | 5% methanol | 70.3 | 181.0 |
| 6 | DMH 46% + Fructose 46% | HMDA (8%) | 70% | 10% methanol | 16.3 | 134.0 |
| 7 | DMH 42.5% + Fructose 42.5% | HMDA (15%) | 50% | none | 96.0 | 343.9 |
| 8 | DMH 42.5% + Fructose 42.5% | HMDA (15%) | 50% | 5% methanol | 81.0 | 252.7 |
| 9 | DMH 42.5% + Fructose 42.5% | HMDA (15%) | 50% | 9% methanol | 36.0 | 182.2 |
| 10 | DMH 42.5% + Fructose 42.5% | HMDA (15%) | 50% | 10% methanol | 28.7 | 171.7 |

| | | | | | | |
|---|---|---|---|---|---|---|
| Key: DMH: dextrose monohydrate HMDA: hexamethylenediamine | | | | | | |

The permeation time and viscosity of the binders of Examples 1-10 shown in Table 1 was assessed and compared against a comparative example of a phenol formaldehyde based binder which is not in accordance with the present invention using the following test protocol:
- Put a 2cm depth of aqueous binder solution into 10cm diameter flat bottomed glass beaker taking care to have a temperature of about 20 °C.
- Put a 2cm x 2cm square of kraft paper flat on the surface of the aqueous binder solution at the centre of the beaker taking care to always put the same paper surface side on aqueous binder solution surface (see carving direction of the paper)
- Measure the time with stop watch until by visual inspection at least about 95% of the surface area of the paper can be seen to have been penetrated by the binder solution.

Examples 3, 6, 9 and 10 in particular show an average permeation time (and thus an ability to impregnate laminate core material) which is comparable with, and indeed better than, the standard phenol formaldehyde resin of the comparative example.

## Claims

1. A method of manufacturing a laminate comprising
- providing a binder impregnated core layer by impregnating at least one fibrous core layer with an aqueous core binder solution having a viscocity in the range 10 cP to 500 cP at a temperature of 20°C and a bake-out solid content in the range 40 wt% to 85 wt%, in which the aqueous core binder solution comprises (i) at least 25% by dry weight of: (a) reducing sugar reactant(s) and nitrogen-containing reactant(s) and/or (b) curable reaction product(s) of reducing sugar reactant(s) and nitrogen-containing reactant(s); and (ii) between 5% and 15% by weight of a non-aqueous solvent based on the total weight of the aqueous binder solution;
- providing a semi-finished assembly by assembling the binder impregnated core layer with a surface layer; and
- applying heat and pressure to the semi-finished assembly to cure the binder in the binder impregnated core layer and secure the core layer and the surface layer together.

2. A method in accordance with claim 1 wherein the aqueous binder solution comprises at least 25% by dry weight of reaction product(s) of (i) at least one nitrogen-containing reactant selected from the group consisting of a primary amine, a di-primary diamine, HMDA and combinations thereof and (ii) a reducing sugar reactant selected from the group consisting of dextrose, fructose, xylose, and mixtures thereof.

3. A method in accordance with any preceding claim wherein the solvent comprises an alcohol.

4. A method in accordance with any preceding claim wherein the solvent comprises methanol.

5. A method in accordance with any preceding claim wherein the aqueous binder solution is substantially formaldehyde free.

6. A method in accordance with any preceding claim wherein the at least one fibrous core layer comprises a cellulosic fibrous sheet, notably a kraft paper sheet.

7. A process in accordance with any preceding claim wherein the aqueous core binder solution has a viscosity at 20°C which is in the range 85 to 150 cP, preferably at least 90 cP to 120 cP.

8. A method in accordance with any preceding claim wherein the aqueous core binder solution has a bake-out solid content in the range of 50 wt% to 70 wt%.

9. A method in accordance with any preceding claim wherein the aqueous core binder solution is obtainable by combining: (i) carbohydrate reactant(s) present by dry weight in a quantity in the range 50% to 95%, preferably 60% to 80; (ii) nitrogen-containing reactant(s) present by dry weight in a quantity in the range 5% to 50%, preferably 10% to 40%; and (iii) water.

10. A method in accordance with any preceding claim wherein the aqueous core binder solution comprises between 7% and 11% by weight of the non-aqueous solvent based on the total weight of the aqueous binder solution.

11. A method in accordance with any preceding claim wherein, during application of heat and pressure to the semi-finished assembly, at least part of the solvent is released, captured and collected.

12. A method in accordance with any preceding claim wherein, the surface layer in the semi-finished assembly is provided with a melamine formaldehyde binder.

13. A method in accordance with any preceding claim, wherein the laminate is selected from the group consisting of high pressure laminates (HPL), continuous pressure laminates (CPL), low pressure laminates (LPL) and compact laminates.

14. Use of an aqueous binder solution in the manufacture of a laminate to reduce the formaldehyde content of the laminate wherein the aqueous binder solution has a viscosity in the range 10 cP to 500 cP at a temperature of 20°C and a bake-out solid content in the range 40 wt% to 85 wt%, and in which the aqueous binder solution comprises (i) at least 25% by dry weight of: (a) reducing sugar reactant(s) and nitrogen-containing reactant(s) and/or (b) curable reaction product(s) of reducing sugar reactant(s) and nitrogen-containing reactant(s); and (ii) between 5% and 15% by weight of a non-aqueous solvent based on the total weight of the aqueous binder solution.

15. Use of an aqueous binder solution in the manufacture of a laminate in accordance with claim 14, in which the aqueous binder solution is used to impregnate a kraft paper core layer of the laminate.

## Patentansprüche

1. Verfahren zur Herstellung eines Laminats, umfassend
- Bereitstellen einer mit Bindemittel imprägnierten Kernschicht durch Imprägnieren mindestens einer faserigen Kernschicht mit einer wässrigen Kernbindemittellösung mit einer Viskosität in dem Bereich von 10 cP bis 500 cP bei einer Temperatur von 20°C und einem Ausbackfeststoffgehalt in dem Bereich von 40 Gew.-% bis 85 Gew.-%, wobei die wässrige Kernbindemittellösung (i) mindestens 25 Trockengew.-% von: (a) (einem) reduzierenden Zuckerreaktanten und (einem) stickstoffhaltigen Reaktanten und/oder (b) (einem) härtbaren Umsetzungsprodukt(en) von (einem) reduzierenden Zucker-Reaktanten und (einem) stickstoffhaltigen Reaktanten; und (ii) zwischen 5 und 15 Gew.-% eines nichtwässrigen Lösungsmittels, bezogen auf das Gesamtgewicht der wässrigen Bindemittellösung, umfasst;
- Bereitstellen einer halbfertigen Anordnung durch Zusammensetzen der mit Bindemittel imprägnierten Kernschicht mit einer Oberflächenschicht; und
- Anwenden von Wärme und Druck auf die halbfertige Anordnung, um das Bindemittel in der mit Bindemittel imprägnierten Kernschicht zu härten und die Kernschicht und die Oberflächenschicht aneinander zu befestigen.

2. Verfahren nach Anspruch 1, wobei die wässrige Bindemittellösung mindestens 25 Trockengew.-% von Umsetzungsprodukt(en) von (i) mindestens einem stickstoffhaltigen Reaktanten, ausgewählt aus der Gruppe, bestehend aus einem primären Amin, einem di-primären Diamin, HMDA und Kombinationen davon, und (ii) einem reduzierenden Zuckerreaktanten, ausgewählt aus der Gruppe, bestehend aus Dextrose, Fructose, Xylose und Gemischen davon, umfasst.

3. Verfahren nach einem vorhergehenden Anspruch, wobei das Lösungsmittel einen Alkohol umfasst.

4. Verfahren nach einem vorhergehenden Anspruch, wobei das Lösungsmittel Methanol umfasst.

5. Verfahren nach einem vorhergehenden Anspruch, wobei die wässrige Bindemittellösung im Wesentlichen formaldehydfrei ist.

6. Verfahren nach einem vorhergehenden Anspruch, wobei die mindestens eine faserige Kernschicht eine Zellulosefaserbahn, insbesondere eine Kraftpapierbahn, umfaßt.

7. Verfahren nach einem vorhergehenden Anspruch, wobei die wässrige Kernbindemittellösung eine Viskosität bei 20°C aufweist, die in dem Bereich von 85 bis 150 cP, vorzugsweise von mindestens 90 cP bis 120 cP liegt.

8. Verfahren nach einem vorhergehenden Anspruch, wobei die wässrige Kernbindemittellösung einen Ausbackfeststoffgehalt in dem Bereich von 50 Gew.-% bis 70 Gew.-% aufweist.

9. Verfahren nach einem vorhergehenden Anspruch, wobei die wässrige Kernbindemittellösung erhältlich ist durch Kombinieren von: (i) (einem) Kohlenhydratreaktanten, (der/die) nach Trockengewicht in einer Menge in dem Bereich von 50% bis 95%, vorzugsweise 60% bis 80%, vorhanden (ist/sind); (ii) (einem) stickstoffhaltigen Reaktanten, (der/die) nach Trockengewicht in einer Menge in dem Bereich von 5% bis 50%, vorzugsweise 10% bis 40%, vorhanden (ist/sind); und (iii) Wasser.

10. Verfahren nach einem vorhergehenden Anspruch, wobei die wässrige Kernbindemittellösung zwischen 7 Gew.-% und 11 Gew.-% des nichtwässrigen Lösungsmittels, bezogen auf das Gesamtgewicht der wässrigen Bindemittellösung, umfasst.

11. Verfahren nach einem vorhergehenden Anspruch, wobei während der Anwendung von Wärme und Druck auf die halbfertige Anordnung mindestens ein Teil des Lösungsmittels freigesetzt, aufgefangen und gesammelt wird.

12. Verfahren nach einem vorhergehenden Anspruch, wobei die Oberflächenschicht in der halbfertigen Anordnung mit einem Melamin-Formaldehyd-Bindemittel versehen ist.

13. Verfahren nach einem vorhergehenden Anspruch, wobei das Laminat ausgewählt ist aus der Gruppe, bestehend aus Hochdrucklaminaten (HPL), kontinuierlichen Drucklaminaten (CPL), Niederdrucklaminaten (LPL) und kompakten Laminaten.

14. Verwendung einer wässrigen Bindemittellösung bei der Herstellung eines Laminats, um den Formaldehydgehalt des Laminats zu reduzieren, wobei die wässrige Bindemittellösung eine Viskosität in dem Bereich von 10 cP bis 500 cP bei einer Temperatur von 20°C und einen Ausbackfeststoffgehalt in dem Bereich von 40 Gew.-% bis 85 Gew.-% aufweist, und wobei die wässrige Bindemittellösung (i) mindestens 25 Trockengew.-% von: (a) (einem) reduzierenden Zucker-Reaktanten und (einem) stickstoffhaltigen Reaktanten und/oder (b) (einem) härtbaren Umsetzungsprodukt(en) von (einem) reduzierenden Zucker-Reaktanten und (einem) stickstoffhaltigen Reaktanten; und (ii) zwischen 5 und 15 Gew.-% eines nichtwässrigen Lösungsmittels, bezogen auf das Gesamtgewicht der wässrigen Bindemittellösung, umfasst.

15. Verwendung einer wässrigen Bindemittellösung bei der Herstellung eines Laminats nach Anspruch 14, wobei die wässrige Bindemittellösung dazu verwendet wird, eine Kraftpapierkernschicht des Laminats zu imprägnieren.

## Revendications

1. Méthode de fabrication d'un stratifié comprenant :
- la provision d'une couche de coeur imprégnée d'un liant par imprégnation d'au moins une couche de coeur fibreuse avec une solution aqueuse de liant de coeur ayant une viscosité dans la gamme allant de 10 cP à 500 cP à une température de 20°C et une teneur solide en extrait sec dans la gamme allant de 40% à 85% en poids, où la solution aqueuse de liant de coeur comprend (i) au moins 25% en poids sec de : (a) réactif(s) sucre réducteur et réactif(s) contenant de l'azote et/ou (b) produit(s) de réaction réticulable de réactif(s) sucre réducteur et réactif(s) contenant de l'azote ; et (ii) entre 5 et 15% en poids d'un solvant non-aqueux, sur base du poids total de la solution aqueuse de liant ;
- la provision d'un assemblage semi-fini par assemblage de la couche de coeur imprégnée d'un liant avec une couche de surface ; et
- l'application de chaleur et de pression sur l'assemblage semi-fini pour réticuler le liant dans la couche de coeur imprégnée de liant et fixer la couche de coeur et la couche de surface ensemble.

2. Méthode selon la revendication 1, où la solution aqueuse de liant comprend au moins 25% en poids sec de produit(s) de réaction de (i) au moins un réactif contenant de l'azote sélectionné parmi le groupe consistant en une amine primaire, une diamine di-primaire, HMDA et leurs combinaisons et (ii) un sucre réducteur sélectionné parmi le groupe consistant en du dextrose, du fructose, du xylose et les mélanges de ceux-ci.

3. Méthode selon l'une quelconque des revendications précédentes, où le solvant comprend un alcool.

4. Méthode selon l'une quelconque des revendications précédentes, où le solvant comprend du méthanol.

5. Méthode selon l'une quelconque des revendications précédentes, où la solution aqueuse de liant est substantiellement sans formaldéhyde.

6. Méthode selon l'une quelconque des revendications précédentes, où l'au moins une couche de coeur fibreuse comprend une feuille fibreuse cellulosique, notamment une feuille de papier kraft.

7. Méthode selon l'une quelconque des revendications précédentes, où la solution aqueuse de liant de coeur a une viscosité à 20°C dans la gamme allant de 85 à 150 cP, de préférence d'au moins 90 cP à 120 cP.

8. Méthode selon l'une quelconque des revendications précédentes, où la solution aqueuse de liant de coeur a une teneur solide en extrait sec dans la gamme allant de 50% à 70% en poids.

9. Méthode selon l'une quelconque des revendications précédentes, où la solution aqueuse de liant de coeur est obtenable en combinant : (i) un réactif(s) glucide présent en poids sec en une quantité allant de 50% à 95%, de préférence de 60% à 80% ; (ii) un réactif(s) contenant de l'azote présent en poids sec en une quantité allant de 5% à 50%, de préférence de 10% à 40% ; et (iii) de l'eau.

10. Méthode selon l'une quelconque des revendications précédentes, où la solution aqueuse de liant de coeur comprend entre 7% et 11% en poids du solvant non-aqueux sur base du poids total de la solution aqueuse de liant.

11. Méthode selon l'une quelconque des revendications précédentes, où durant l'application de chaleur et de pression sur l'assemblage semi-fini, au moins une partie du solvant est relâchée, capturée et collectée.

12. Méthode selon l'une quelconque des revendications précédentes, où la couche de surface dans l'assemblage semi-fini est fournie avec un liant mélamine-formaldéhyde.

13. Méthode selon l'une quelconque des revendications précédentes, où le stratifié est sélectionné parmi le groupe consistant en des stratifiés haute pression (HPL), des stratifiés à pression continue (CPL), des stratifiés basse pression (LPL) et des stratifiés compacts.

14. Utilisation d'une solution aqueuse de liant dans la fabrication d'un stratifié pour réduire la quantité de formaldéhyde dans le stratifié, où la solution aqueuse de liant a une viscosité dans la gamme allant de 10 cP à 500 cP à une température de 20°C et une teneur solide en extrait sec dans la gamme allant de 40% à 85% en poids, et où la solution aqueuse de liant comprend (i) au moins 25% en poids sec de : (a) réactif(s) sucre réducteur et réactifs) contenant de l'azote et/ou (b) produit(s) de réaction réticulable de réactif(s) sucre réducteur et réactif(s) contenant de l'azote ; et (ii) entre 5 et 15% en poids d'un solvant non-aqueux, sur base du poids total de la solution aqueuse de liant.

15. Utilisation d'une solution aqueuse de liant dans la fabrication d'un stratifié selon la revendication 14, où la solution aqueuse de liant est utilisée pour imprégner une couche de coeur en papier kraft du stratifié.
